# EUROPÄISCHE PATENTSCHRIFT

(11) **EP 0 557 482 B1**
(45) Veröffentlichungstag und Bekanntmachung des Hinweises auf die Patenterteilung: **03.01.1996**
(21) Anmeldenummer: 92918646.8
(22) Anmeldetag: 07.09.1992
(51) Int. Cl.: B01D 29/15, B01D 29/60, B01D 29/66, B01D 29/92

(54) **RÜCKSPÜLBARES FILTERELEMENT**
BACK WASHABLE FILTER ELEMENT
ELEMENT DE FILTRAGE LAVABLE A CONTRE-COURANT

(30) Priorität: 13.09.1991 CH 2714/91
(43) Veröffentlichungstag der Anmeldung: 01.09.1993
(73) Patentinhaber: DrM, Dr. Müller AG, CH-8708 Männedorf ZH (CH)
(72) Erfinder: HÖHLE, Glenn, CH-8708 Männedorf (CH)
(86) Internationale Anmeldenummer: CH9200181
(87) Internationale Veröffentlichungsnummer: WO9305860

(56) Entgegenhaltungen:
- EP-A- 0 066 921
- DE-A- 2 006 685
- US-A- 3 382 978
- US-A- 4 973 404

## Beschreibung

Die Erfindung betrifft ein rückspülbares Filterelement zum Einbau in einen Druckbehälter, bestehend aus einem Filtergewebe, das einen Stützkörper aus perforierten Rohren und einem Zentralrohr zum Abführen des Filtrates umgibt sowie einem Kopfteil.

Ein Filterelement der Art ist aus der CH-A-655859 bekannt. Das bekannte Filterelement, welches zur Restvolumenfiltration geeignet ist, besteht aus einem über seine ganze Länge geschlossenen Zentralrohr. Durch das Zentralrohr wird ein Filtrat abgeführt und nach beendeter Filtration ein Rückspülmedium entgegen der Filtrationsrichtung zur Reinigung der Filtermittel zugeführt. Zur Stützung des Filtermittels, in der Regel ein Gewebe, ist das Zentralrohr von perforierten Rohren umgeben. Beim bekannten Filterelement kann das Filtrat nur über die untere Oeffnung des Zentralrohres abgeführt werden. Das hat den Nachteil, dass durch das begrenzte Lumen des Zentralrohres die Kapazität des Filters stark limitiert ist, auch die Geschwindigkeit und Effizienz der Rückspülung ist dadurch sehr begrenzt.

Aufgabe der Erfindung ist es, die Leistung eines Filterelements der Art zu erhöhen und gleichzeitig eine Trocknung und Trockenaustragung eines Filterkuchens zu ermöglichen.

Diese Aufgabe wird erfindungsgemäss dadurch gelöst, dass im Kopfteil des Filterelementes wenigstens eine den oberen Öffnungen der Rohre zugewandte Bohrung und eine dem Flansch zugewandte Bohrung sowie ein Sitz zur Aufnahme einer Drucksteuereinrichtung vorgesehen ist.

Das Zentralrohr ist zweckmässig mittels eines oder mehreren Bohrungen bzw. Kanälen mit den Oeffnungen der als Stützrohre dienenden Rohre verbunden. Das hat den Vorteil, dass dadurch die Filtrationsleistung erheblich erhöht werden kann. und eine grosse Rückspülleistung zur Verfügung steht.

Es ist zweckmässig, eine Drucksteuerung vorzusehen, mit welcher die Durchflussleistung gesteuert werden kann.

Es ist daher vorteilhaft, die Drucksteuerung als Ventil auszubilden.

Das Ventil kann ein Membranventil oder ein Kugelventil sein.

Es ist weiter von Vorteil, ein Rückschlagventil vorzusehen.

Die Drucksteuerung in Kombination mit einem Membranventil ist besonders zweckmässig.

Die Erfindung soll anhand einer Zeichnung näher beschrieben werden.

Es zeigen:
- Fig. 1: einen Längsschnitt durch das erfindungsgemässe Filterelement.
- Fig. 2: eine Variante.
- Fig. 3: einen Ausschnitt einer Ausführung eines Ventils für das erfindungsgemässe Filterelement.
- Fig. 4: eine weitere Ausführung eines Ventils gemäss Fig. 3 .

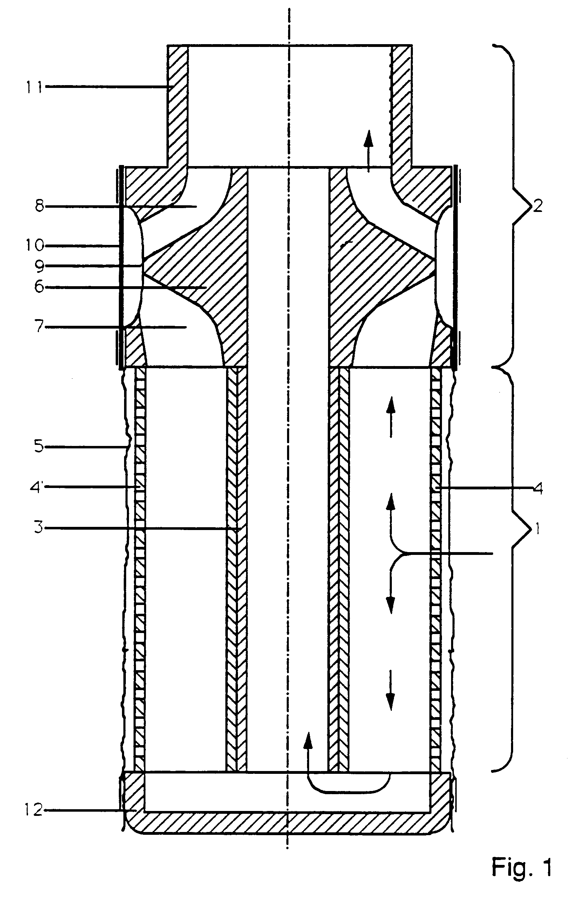

Gemäss Fig. 1 besteht das Filterelement aus einem Filtrationsteil 1 und einem Kopfteil 2. Der Filtrationsteil 1 weist ein Zentralrohr 3 auf, um welches herum als Stützelemente perforierte Rohre 4,4' angeordnet sind, die von einem Gewebe 5 als Filtermittel umgeben sind, welches in bekannter Weise befestigt ist. Der Kopfteil 2 besteht aus einer Platte 6, welche mit einer Bohrung 7 und einer Bohrung 8 sowie einem Sitz 9 versehen ist. Die Bohrungen 7 und 8 sind durch eine aufblasbare Membran 10 im Sitz 9 verschliessbar. Die Membran 10 ist als Teil eines Membranventils ausgebildet. Der obere Teil des Kopfes 2 bildet einen Flansch 11 der zur Befestigung des ganzen Filterelements dient. Im unteren Teil ist das Filterelement durch eine Bodenplatte 12 mit einer zentralen Oeffnung verschlossen.

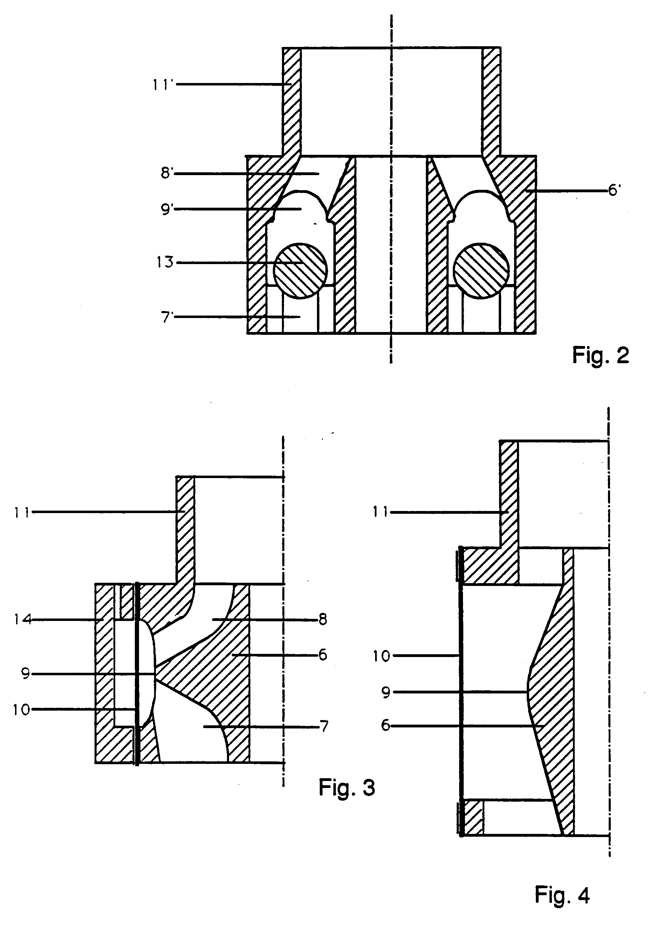

In Fig. 2 ist eine Variante des Kopfteiles 2 vorgesehen. Eine Platte 6' ist mit einer unteren Bohrung 7'und einer oberen Bohrung 8' sowie mit einem Sitz 9'versehen. Im Sitz 9'ist eine Kugel 13 zum Verschliessen des Sitzes 9' vorgesehen und funktioniert als Teil eines Kugelventils.

In Fig 3 ist der linke Teil des Kopfes 2 der Fig. 1 dargestellt. Hier ist das Ventil als Doppelmembranventil mit einem Stützelement 14 ausgebildet.

Fig. 4 ist eine Variante gemäss Fig. 1, jedoch mit nur einem Stützelement ausgebildet.

Im Betrieb des Filterelementes, während der Filtrationsphase, ist das erfindungsgemässe Filterelement in einem Druckbehälter vorgesehen, wobei es vollständig in eine Trübe eintaucht. Durch die Druckdifferenz innerhalb und ausserhalb des Filterelements durchströmt das Filtrat das Filtermittel 5, auf welchem sich ein Filterkuchen aus Feststoffen ablagert. Das Filtrat vermag nun durch die Rohre 4,4' nach unten in das Zentralrohr 3 abzufliessen oder über das druckgesteuerte Ventil im Kopfteil 2 zu entweichen. Die Filtrationsrichtung ist durch Pfeile angedeutet.

Nach beendeter Filtration wird ein Rückspülmittel, das ein Gas oder einen Flüssigkeit sein kann, entgegen der Filtrationsrichtung über den ganzen Querschnitt des Kopfes 2 dem Filterelement zugeführt. Das Rückspülmittel dringt bei geschlossenem Ventil durch das Zentralrohr 3 nach unten und über die Rohre 4,4' von innen nach aussen durch das Filtermittel 5. Im Bedarfsfall kann die Menge des Rückspülmittels durch Öffnen des Ventils im Kopfteil 2 drastisch erhöht werden. In diesem Fall ist es möglich, die Rohre 4,4'direkt zu beaufschlagen und damit die Gewebe mit jeder gewünschten Menge an Rückspülmittel zu versorgen.

Der Vorteil der erfindungsgemässen Filterkerze ist, dass durch alle Kanäle, durch das Zentralrohr und die Stützrohre ein individuelles Filterelement gesteuert und mit grösserer Durchflussleistung und kleinerem Widerstand betrieben werden kann. Ein Filterkuchen wird durch Rückblasen, beispielsweise mittels eines Trockengases, nur über das Zentralrohr getrocknet, wodurch die Filterkerze auch vollständig entleert werden kann. Zur Trockenaustragung können Zentralrohre und Stützrohre mit grosser Durchflussleistung und kleinerem Widerstand zurückgeblasen werden. Die Steuerung der Kanäle kann durch Rückschlagventile unter Berücksichtigung der im Filterbehälter herrschenden Druck- und Strömungsverhältnisse in bekannter Weise gesteuert werden.

## Patentansprüche

1. Rückspülbares Filterelement zum Einbau in einen Druckbehälter, bestehend aus einem Filtergewebe (5), das einen Stützkörper aus perforierten Rohren (4,4') und einem Zentralrohr (3) zum Abführen des Filtrates umgibt sowie einem Kopfteil (2), dadurch gekennzeichnet, dass im Kopfteil (2) des Filterelementes wenigstens eine den oberen Öffnungen der Rohre (4,4') zugewandte Bohrung (7) und eine dem Flansch (11) zugewandte Bohrung (8) sowie einen Sitz (9) zur Aufnahme einer Drucksteuereinrichtung vorgesehen ist.

2. Filterelement nach Anspruch 1, dadurch gekennzeichnet, dass die Drucksteuereinrichtung als Ventil ausgebildet ist.

3. Filterelement nach Anspruch 2, dadurch gekennzeichnet, dass das Ventil mit einer Membran (10) versehen ist.

4. Filterelement nach Anspruch 2, dadurch gekennzeichnet, dass das Ventil mit einer Kugel (13) versehen ist.

5. Filterelement nach Anspruch 2, dadurch gekennzeichnet, dass das Ventil als Rückschlagventil ausgebildet ist.

6. Filterelement nach Anspruch 2, dadurch gekennzeichnet, dass das Ventil mit einer Membran (10) und einem Stützelement (14) versehen ist.

## Claims

1. A back washable filter element, for incorporation into a pressure vessel, consisting of a filter fabric (5) which surrounds a supporting body of perforated tubes (4, 4') and a central tube (3) for the removal of the filtrate, and also of a head piece (2), characterised in that in the head piece (2) of the filter element at least one bore (7), facing the upper openings of the tubes (4, 4') and a bore (8), facing the flange (11), and also a seat (9) to receive a pressure control device are provided.

2. A filter element according to Claim 1, characterised in that the pressure control device is constructed as a valve.

3. A filter element according to Claim 2, characterised in that the valve is provided with a membrane (10).

4. A filter element according to Claim 2, characterised in that the valve is provided with a ball (13).

5. A filter element according to Claim 2, characterised in that the valve is constructed as a non-return valve.

6. A filter element according to Claim 2, characterised in that the valve is provided with a membrane (10) and a supporting element (14).

## Revendications

1. Elément filtrant lavable à contre-courant destiné à être monté dans un récipient sous pression et comprenant un tissu filtrant (5) qui entoure un corps d'appui composé de tubes perforés (4, 4') et d'un tube central (3) destiné à l'évacuation du filtrat, et une partie supérieure (2), caractérisé en ce qu'il est prévu dans la partie supérieure (2) de l'élément filtrant au moins un perçage (7) tourné vers les ouvertures supérieures des tubes (4, 4'), un perçage (8) tourné vers la bride (11) et un logement (9) destiné à recevoir un dispositif de commande de pression.

2. Elément filtrant selon la revendication 1, caractérisé en ce que le dispositif de commande de pression est conçu comme une soupape.

3. Elément filtrant selon la revendication 2, caractérisé en ce que la soupape est pourvue d'une membrane (10).

4. Elément filtrant selon la revendication 2, caractérisé en ce que la soupape est pourvue d'une bille (13).

5. Elément filtrant selon la revendication 2, caractérisé en ce que la soupape est conçue comme un clapet anti-retour.

6. Elément filtrant selon la revendication 2, caractérisé en ce que la soupape est pourvue d'une membrane (10) et d'un élément d'appui (14).
